# EUROPÄISCHE PATENTANMELDUNG

(11) **EP 0 890 527 A2**
(43) Veröffentlichungstag der Anmeldung: **13.01.1999**
(21) Anmeldenummer: 98109288.5
(22) Anmeldetag: 20.05.1998
(51) Int. Cl.: B65D 88/12

(54) **Logistiksystem zur handhabung funktioneller einheiten**

(30) Priorität: 20.08.1997 DE 19736101; 10.07.1997 DE 29712310 U
(71) Anmelder: BAYOSAN WACHTER GmbH & Co.KG, D-87541 Hindelang/Allgäu (DE)
(72) Erfinder: Graff, Nikolaus, 87541 Hindelang (DE); Hindelang, Donat, 87549 Rettenberg (DE)
(74) Vertreter: Zipse + Habersack

(57) **Zusammenfassung**

Die Erfindung betrifft ein Logistiksystem zur Handhabung verschiedener funktioneller Einheiten wie z.B. Behälter und Container, insbesondere für den Betrieb auf Baustellen. Die unterschiedlichen funktionellen Einheiten (10,24,30,40) sind zur Handhabung mit einem Handhabungsgerät, z.B. einem Absetzkipper, vorgesehen und haben an zwei einander abgewandten Seiten Beschläge, die von Greifelementen des Handhabungsgerät greifbar sind, die fest an dessen Greifarmen ausgebildet sind, z.B. Greifklauen. Um eine einfache und beim Heben auspendelnde Handhabung unterschiedlicher Einheiten mit einem Handhabungsgerät zu ermöglichen, sind die Beschläge oberhalb des Schwerpunktes der funktionellen Einheit (10,24,30,40) angeordnet.

## Beschreibung

Die vorliegende Erfindung betrifft ein Logistiksystem zur Handhabung unterschiedlicher funktioneller Einheiten wie z. B. quaderförmige Boxen, Container für Baugeräte oder Personen, Platt-formen, Wasserbehälter, Gittercontainer, Gerüste und Maschinenmodule, die zumindest hinsichtlich ihrer Breite auf die Abmessungen eines bestimmten Handhabungsgerätes standardisiert sind, in dem Sinne, daß alle funktionellen Einheiten von ein und demselben Handhabungsgerät gegriffen und gehandhabt werden können. Dies umfaßt selbstverständlich eine gewisse geometrische Anordnung der Beschläge zueinander.

Es ist Aufgabe der Erfindung ein derartiges Logistiksystem zu schaffen, das eine auspendelnde Handhabung unterschiedlicher funktioneller Einheiten auch bei ungleichmäßiger Belastung ermöglicht.

Diese Aufgabe wird erfindungsgemäß durch ein System mit den Merkmalen des Anspruchs 1 gelöst.

Erfindungsgemäß werden unterschiedlichste funktionelle Einheiten, wie z.B. Silos, Werkzeugboxen, Gitterboxen etc. von einem einzigen Handhabungsgerät, z. B. einem Absetzkipper an identisch oder in übereinstimmender Weise ausgebildeten Beschlägen gegriffen. Diese sind als Löcher, Zapfen oder Bügel zum Zusammenwirken mit (komplementären) Greifelementen ausgebildet, die fest an den Greifarmen des Handhabungsgeräts ausgebildet sind, z.B. Greifklauen oder Greifbolzen. Die an den unterschiedlichen funktionellen Einheiten in gleicher Weise ausgebildeten Beschläge sind in einer derartigen Höhe angebracht, daß sie sich oberhalb des Schwerpunktes sowohl der beladenen als auch der unbeladenen Einheit befinden. Hierfür kann es notwendig sein, an den von einander abgewandten Seiten der funktionellen Einheit nach oben ragende Tragwände oder Ohren vorzusehen, an denen die Beschläge angebracht sind, so daß sie mit Sicherheit oberhalb des Schwerpunktes der funktionellen Einheit liegen.

Die Tragwände oder Ohren können somit über die Oberseite der funktionellen Einheit hinausragen. Dadurch, daß alle unterschiedlichen funktionellen Einheiten mit dem identischen Beschlagsystem ausgerüstet sind, lassen sich mit einem Handhabungsgerät die unterschiedlichsten funktionellen Einheiten sogar auf einer Ladefläche des Handhabungsgerätes transportieren und handhaben. Dies verringert den Logistikaufwand für den Baustellenbetrieb wesentlich, da nun nicht unterschiedliche Handhabungsgeräte für die unterschiedlichen funktionellen Einheiten vorgesehen werden müssen.

Vorzugsweise sind die Beschläge zumindest ungefähr in einer vertikalen Ebene mit dem Schwerpunkt der beladenen und/oder unbeladenen funktionellen Einheit angeordnet. In diesem Fall pendelt die funktionelle Einheit bei der Handhabung selbsttätig in eine ausbalancierte Lage, selbst wenn nur zwei Beschläge, d.h. jeweils ein Beschlag an den abgewandten Seiten vorgesehen ist.

In einer vorteilhaften Ausführungsform der Erfindung sind an den voneinander abgewandten Seiten mehrere horizontal nebeneinander angeordnete Anordnungspunkte für die Beschläge vorgesehen, so daß eine eventuelle asymmetrische Beladung der funktionellen Einheit durch ein einfaches Versetzen der Beschläge in einer vertikale Ebene mit dem Schwerpunkt der Einheit eine auspendelnde Handhabung der funktionellen Einheit ermöglicht, so daß diese lediglich durch die Aufnahmeklauen des Absetzkippers oder eines anderen Handhabungsgeräts gegriffen werden kann. Eine Ausbalancierung der Einheit ist somit auch bei ungleichmäßiger Beladung möglich.

Die Realisierung mehrerer nebeneinander angeordneter Anordnungspunkte kann auf unterschiedliche Weise erfolgen. Es kann z. B. eine horizontale Rastführung in Art einer Kulisse vorgesehen sein, in der einen Beschlag, z.B. Zapfen horizontal verschiebbar und in verschiedenen Positionen verrastbar ist. Es können auch mehrere Befestigungspunkte für einen Zapfen nebeneinander angeordnet sein. Es ist sogar möglich nebeneinander mehrere Beschläge, z.B. Zapfen vorzusehen, sofern die Tätigkeit des Handhabungsgeräts dabei nicht beeinträchtigt wird, was z.B. durch aufeinander zu gekröpfte Aufnahmeklauen des Handhabungsgeräts realisiert werden kann, welche beim Greifen eine Zapfens außenseitig an den anderen Zapfen vorbei schwenken.

Es ist auch möglich, separate Befestigungspunkte für den Beschlag vorzusehen, so daß der Beschlag auf einen bestimmten Befestigungspunkt gesteckt werden muß, der in seiner Position der asymmetrischen Lastverteilung Rechnung trägt. In jedem Fall kann der Beschlag in Längsrichtung der funktionellen Einheit auch in der Mitte angeordnet werden, was zu einer auspendelnden Handhabung bei einer unbeladenen oder symmetrisch beladenen funktionellen Einheit führt.

Vorzugsweise ist die funktionelle Einheit im Bereich der Anordnungspunkte für die Beschläge verstärkt, z.B. durch eine zusätzliche Platte oder Träger, die die Seitenwand versteifen und zu einer besseren Lastverteilung vom Beschlag auf Decke und/oder Seitenwand führen. Es ist auch möglich zwischen den beiden Beschlägen Verbindungsstreben oder -Platten vorzusehen, um die Stabilität der Beschläge relativ zueinander und damit auch die Stabilität insgesamt zu verbessern. Die Beschläge könnten so z. B. auch durch in die funktionelle Einheit, z. B. eine Box, hinein ragende Streben stabilisiert werden, die die Seitenwand im Bereich der Anordnungspunkte mit der Decke oder der gegenüberliegenden Seitenwand verbinden.

Die Erfindung wird nun nachfolgend in der schematischen Zeichnung anhand von Ausführungsbeispielen erläutert. In dieser zeigen:
- Figur 1: eine Werkzeug- oder Aufenthaltsbox mit drei separaten Befestigungspunkten für einen Zapfenbeschlag,
- Figur 2: einen Wannencontainer, wie er z. B. für Bauschutt oder Müll verwendet wird, mit einer zu Figur 1 identischen Beschlagsanordnung,
- Figur 3: eine Gitterbox mit zu Figur 1 identischer Beschlagsanordnung,
- Figur 4: eine Arbeits- oder Maschinenplattform mit zu Figur 1 identischer Beschlagsanordnung,
- Figur 5: eine detaillierte Ansicht eines horizontal an einer Seitenwand verschiebbar geführten und in unterschiedlichen Raststellungen verrastbaren Beschlags,
- Figur 6: einen Querschnitt durch eine funktionelle Einheit gemäß Fig. 1 mit einer Zapfenbeschlagsanordnung,
- Figur 7: einen Querschnitt gemäß Fig. 6 mit einer zweiten Ausführungsform einer Beschlagsanordnung, und
- Figur 8: einen Querschnitt gemäß Fig. 6 mit einer dritten Ausführungsform einer Beschlagsanordnung.

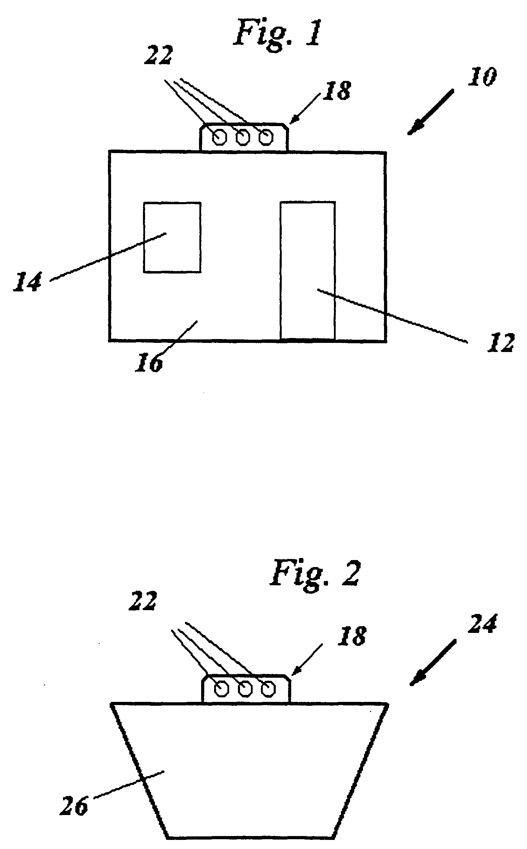

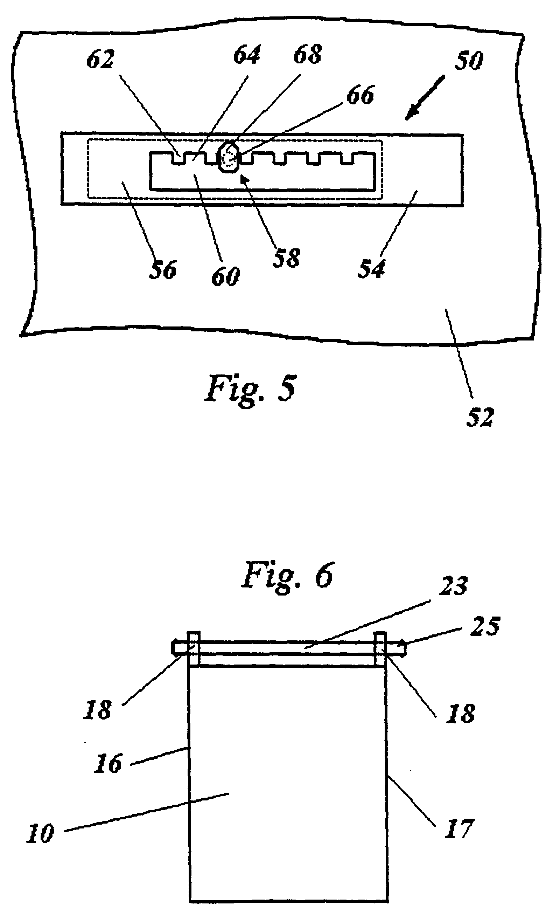

Figur 1 zeigt als funktionelle Einheit eine quaderförmige Raumbox 10 mit einer Türe 12 und einem Fenster 14. Eine derartige Box kann als Aufenthaltsraum oder Werkzeugschuppen auf Baustel-len verwendet werden. In der Abbildung ist die Längsseite 16 der Box 10 dargestellt. Nach oben über die Decke der Box hinausragend und in Längsrichtung der Seitenwand 16 mittig ist ein Beschlag 18 angeordnet, der aus einer vertikalen Trägerplatte 20 besteht, die im großen und ganzen fluchtend oder leicht über die Seitenwand 16 nach vorne (und aus der Zeichenebene) heraus-stehend an der Seitenwand 16 und/oder der Decke der Box 10 angebracht ist. Die Trägerplatte 20 hat drei Aufnahmebohrungen 22, die horizontal auf einer Linie angeordnet sind und zum Einsetzen von Befestigungszapfen dienen, die von einem Be- und Entladegerät für die Box 10, z. B. einem Absetzkipper, gegriffen werden können. Der identische Beschlag 18 ist auf der der Seitenwand 16 abgewandten Seite 17 (Fig.6) der Box 10 angeordnet.

Es kann während des Betriebes der Box auf einer Baustelle oder bereits bei der Ausrüstung der Box mit fest montiertem Mobiliar vorkommen, daß der Schwerpunkt der Box nicht genau mittig liegt. Für diesen Fall sind die drei Befestigungspunkte 22 vorgesehen, da der Beschlagszapfen im Falle einer nicht symmetrischen Gewichtsverteilung für den Eingriff des Absetzkippers auch außermittig an der Trägerplatte 20 befestigt werden kann. Auf diese Weise kann der Tragzapfen tatsächlich an der Stelle angeordnet werden, unter der sich der Schwerpunkt der Box befindet. Da der Beschlag 18 zudem oberhalb des Schwerpunktes der Box 10 angeordnet ist, wird durch diesen Beschlag eine sichere ausgependelte Handhabung der Box möglich. Dies bedeutet, daß die Box an dem Beschlagszapfen durch die Klauen an den Greifarmen eines (nicht abgebildeten) und an sich bekannten Absetzkippers hochgehoben, auf die Ladefläche gehievt und wieder herunter gehoben werden kann. Hierbei ist nur ein Eingriff in die zwei Zapfen nötig, die an den voneinander abgewandten Seiten der Box angeordnet sind. Ein weiterer Befestigungspunkt für das Be- und Entladen muß nicht vorgesehen werden. Die Handhabung dieser Box gestaltet sich somit ausgesprochen einfach.

Figur 2 zeigt eine weitere funktionelle Einheit in Form einer Lademulde 24 z. B. für Sperrmüll oder Bauschutt. Auch diese Mulde 24 hat an ihren voneinander abgewandten Seitenwänden 26 die in Figur 1 bereits näher beschriebenen Beschläge 18. Identische oder funktionsgleiche Teile werden in den nachfolgenden Figuren mit den gleichen Bezugszeichen bezeichnet.

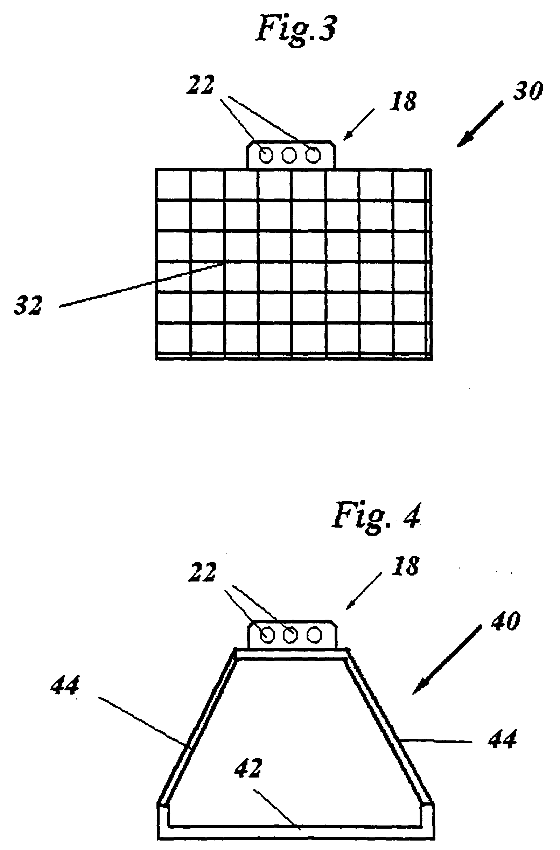

Figur 3 zeigt eine Gitterbox 30, deren Wände aus einem Stahlgitter gebildet sind. Der Boden dieser Gitterbox 30 kann als durchgängige Platte oder Gitter ausgebildet sein. Auch hier erstreckt sich an der Oberseite der Seitenwand 32 der Beschlag 18 mit den drei Befestigungspunkten 22 für einen Tragzapfen.

In gleicher Weise zeigt Figur 4 eine funktionelle Einheit 40 in Form einer Plattform für schwere Teile, wie z. B. Maschinen und dergleichen. Ein sehr stabiler Stahlboden 42 ist dort über vier stabile Streben 44 mit dem Beschlag 18 verbunden.

Die vorstehend beschriebenen Einheiten unterscheiden sich in ihren Abmessungen, zumindest in ihrer Breite, kaum, so daß die Beschläge bei allen Einheiten hinsichtlich ihrer Anordnung und ihres Abstandes identisch sind, was die Handhabung dieser unterschiedlichen Einheiten mit nur einem Handhabungsgerät ermöglicht. Die Beschläge sind vorzugsweise bei allen Einheiten auch in einer definierten Höhe angeordnet.

Figur 5 zeigt eine alternative Ausbildungsform eines Beschlages 50, der aus einer an der Seitenwand 52 angebrachten horizontalen Führung 54 für einen Schiebebolzen 56 besteht, an dem radial ein Zapfenbeschlag 58 absteht. Die Führung 54 hat eine längliche Aussparung 60, aus der der Zapfenbeschlag 58 nach außen herausragt. Die Oberseite der Aussparung 60 weist eine Rastung 62,64 auf, die zur Festlegung unterschiedlicher Positionen des Beschlagzapfens 58 dient. In der dargestellten Position befindet sich der Beschlagzapfen 58 mit seinem (gestrichelt dargestellten) Zapfenteil 66 in der dritten Position von links, welche Position einzustellen ist, wenn die funktionelle Einheit links etwas höher als rechts beladen ist. Der Zapfenteil 66 ist an seinem aus der gleichen Ebene herausstehenden Ende mit einer Abschlußplatte 68 versehen, um ein Entgleiten des Zapfenbeschlags 58 aus der Greifklaue eines Absetzkippers zu verhindern. Die Führung 54 und der Bolzen 56 können einen rechteckigen oder kreisrunden Querschnitt aufweisen.

Figur 6 zeigt einen Querschnitt der Box 10 aus Figur 1 mit Vorderseite 16 und abgewandter Rückseite 17, an welchen die TragPlatten 18 zur Befestigung des Beschlags angeordnet sind. Durch die Tragplatten 18 wird eine längliche Stange 23 gesteckt, deren freie Enden 25 die Zapfenbeschläge für den Eingriff mit Handhabungsgeräten bilden. Eine derartige Konstruktion ist äußerst stabil und verwindungsfrei.

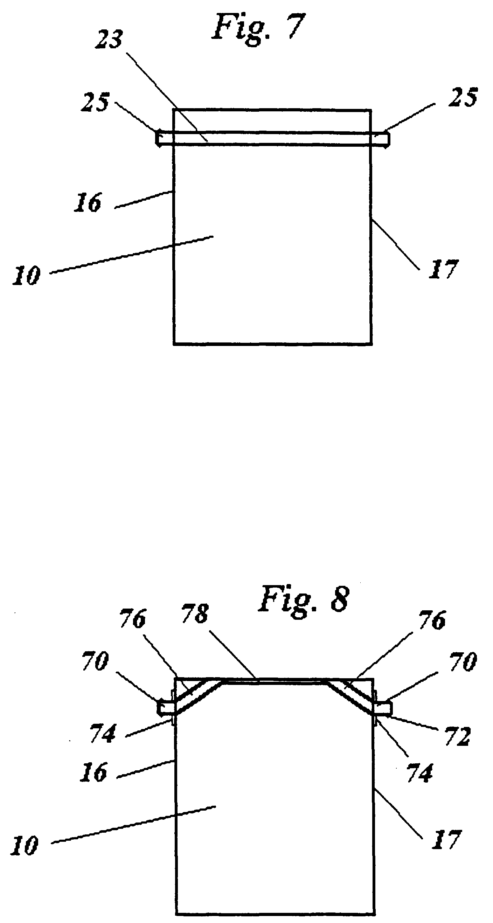

Figur 7 zeigt eine zu Figur 6 weitgehend identische Konstruktion, bei der die Stange 23 allerdings die Seitenwände 16,17 selbst durchsetzt.

Figur 8 zeigt ein drittes Ausführungsbeispiel einer Verstärkung zwischen zwei Zapfenbeschlägen 70, deren freie Enden 72 durchmesservergrößert sind, um ein Abrutschen des Beschlags aus einer Aufnahmeklaue zu verhindern. Der Wandbereich der Seitenwände um die Beschläge 70 ist durch Verstärkungsplatten 74 verstärkt. An der Innenseite der Box erstrecken sich innenseitig der Anordnungspunkte der Beschläge an den Seitenwänden Streben 76 schräg nach oben zur Decke, um die auf die Beschläge wirkenden Kräfte von der Wand auch auf die Decke weiterzuleiten. Der Deckenbereich zwischen den Streben 76 ist wiederum durch Verstärkungsplatten oder -streben 78 verstärkt, wodurch die zwischen den Beschlägen 70 wirkenden Kräfte besser abgefangen werden.

## Patentansprüche

1. Logistiksystem zur Handhabung verschiedener funktioneller Einheiten wie z.B. Behälter und Container, insbesondere für den Betrieb auf Baustellen,
welche unterschiedlichen funktionellen Einheiten (10,24,30,40) zur Handhabung mit einem Handhabungsgerät, z.B. einem Absetzkipper, vorgesehen sind;
in übereinstimmender Weise ist an den unterschiedlichen funktionellen Einheiten (10,24,30,40) an zwei einander abgewandten Seiten jeweils zumindest ein Beschlag vorgesehen, der mit Greifelementen des Handhabungsgeräts zusammenwirkt, die fest an dessen Greifarmen ausgebildet sind;
die Beschläge sind oberhalb des Schwerpunktes der funktionellen Einheit (10,24,30,40) angeordnet.

2. System nach Anspruch 1,
dadurch gekennzeichnet,
daß die Beschläge im wesentlichen in einer vertikalen Ebene mit dem Schwerpunkt der ungefüllten bzw. gefüllten funktionellen Einheit angeordnet sind.

3. System nach Anspruch 1 oder 2,
dadurch gekennzeichnet,
daß mehrere horizontal nebeneinander angeordnete Anordnungspunkte für die Beschläge an den Seiten der funktionellen Einheiten (10,24,30,40) vorgesehen sind.

4. System nach einem der vorhergehenden Ansprüche,
dadurch **gekennzeichnet,**
daß die funktionellen Einheiten Werkzeugräume und Aufenthaltsräume (10) umfassen.

5. System nach einem der vorhergehenden Ansprüche,
dadurch **gekennzeichnet,**
daß die funktionellen Einheiten nach oben hin offene Behälter (24) umfassen.

6. System nach einem der vorhergehenden Ansprüche,
dadurch **gekennzeichnet,**
daß die funktionellen Einheiten Gittercontainer (30) umfassen.

7. System nach einem der vorhergehenden Ansprüche,
dadurch **gekennzeichnet,**
daß die funktionellen Einheiten Plattformen (40) umfassen, die über Streben (44) aufhängbar sind, die sich von dem Plattformboden (42) nach oben erstrecken und auf zwei einander abgewandten Seiten eine Trägerplatte (18) für die Anordnungspunkte (22) aufweist.

8. System nach einem der vorhergehenden Ansprüche,
dadurch **gekennzeichnet,**
daß die funktionellen Einheiten (10,24,30,40) Wasserbehälter umfassen.

9. System nach einem der vorhergehenden Ansprüche,
dadurch **gekennzeichnet,**
daß die funktionellen Einheiten (10,24,30,40) Gerüste umfassen.

10. System nach einem der vorhergehenden Ansprüche,
dadurch **gekennzeichnet,**
daß die Beschläge (25,66,70) als Bügel, Zapfen oder Löcher ausgebildet sind, die zum Zusammenwirken mit Greifklauen oder aufeinander zu weisenden Bolzen eines Absetzkippers ausgebildet sind.

11. System nach einem der vorhergehenden Ansprüche,
dadurch **gekennzeichnet,**
daß die funktionellen Einheiten (10,24,30,40) im Bereich der Befestigungspunkte (70) strukturell verstärkt (74) sind.

12. System nach Anspruch 11,
dadurch **gekennzeichnet,**
daß die funktionellen Einheiten im strukturell verstärkten Bereich mit Verstärkungsplatten (74) oder Rippen zur Stabilisierung der Beschläge (70) versehen sind.

13. System nach Anspruch 12,
dadurch **gekennzeichnet,**
daß die funktionellen Einheiten (10,24,30,40) zwischen den beiden Beschlägen (70) verlaufende Verstärkungsstreben (23;76,78) oder -profile aufweisen.
